# EUROPEAN PATENT APPLICATION

(11) **EP 1 956 323 A2**
(43) Date of publication of application: **13.08.2008**
(21) Application number: 07109488.2
(22) Date of filing: 04.06.2007
(51) Int. Cl.: F25B 49/00, F25B 41/06

(54) **Air conditioner and method of controlling electronic expansion valve thereof**

(30) Priority: 06.02.2007 KR 20070012148
(71) Applicant: Samsung Electronics Co., Ltd., Suwon-si, Gyeonggi-Do (KR)
(72) Inventor: Lee, Dong Kue, Gyeonggi-do (KR)
(74) Representative: Grünecker, Kinkeldey, Stockmair & Schwanhäusser Anwaltssozietät

(57) **Abstract**

Disclosed are an air conditioner and a method of controlling an electronic expansion valve thereof. The method includes the steps of monitoring an opening degree of the electronic expansion valve while adjusting an overheating degree by varying the opening degree of the electronic expansion valve, modifying a calculation equation for the opening degree, which determines a size of the opening degree, when the opening degree of the electronic expansion valve is abnormally varied, and adjusting the opening degree of the electronic expansion valve according to the modified calculation equation for the opening degree.

## Description

### CROSS-REFERENCE TO RELATED APPLICATION

This application claims the benefit of Korean Patent Application No. 2007-12148, filed on February 06, 2007, in the Korean Intellectual Property Office, the disclosure of which is incorporated herein by reference.

### BACKGROUND OF THE INVENTION

### 1. Field of the invention

The present invention relates generally to an air conditioner and a method of controlling an electronic expansion valve thereof, and more particularly to an air conditioner and a method of controlling an electronic expansion valve thereof, capable of modifying a calculation equation for an opening degree of the electronic expansion valve when the opening degree of the electronic expansion valve is abnormally varied.

### 2. Description of the Prior Art

In the air conditioner, an overheating degree is one of the important factors that determine an efficiency of a system. If the overheating degree is not appropriately adjusted, not only is the system efficiency deteriorated, but also the operation of the air conditioner is interrupted. Herein, the overheating degree refers to a difference between the temperature of overheating vapor heated above the saturation temperature and the saturation temperature corresponding to the pressure of the overheating vapor. Practically, in the air conditioner, a difference between the intake temperature of a compressor and the temperature at an inlet of an indoor heat exchanger or an electronic expansion valve is considered as the overheating degree.

Such an overheating degree can be adjusted by varying the opening degree of an electronic expansion valve, for example, Korean Patent Unexamined Publication No. 2006-63001, titled "Multi-Air Conditioner System and Control Method of Opening Degree of Valve Thereof', discloses a method of approaching a target overheating degree by varying the opening degree of an outdoor electronic expansion valve. That is, according to Korean Patent Unexamined Publication No. 2006-63001, the opening degree of the outdoor electronic expansion valve varies through a PID (proportional integral derivative) control until the overheating degree of the air conditioner reaches the target overheating degree. Herein, the PID control utilizes thee-term controller. The thee-term controller includes a proportional term having proportional coefficients, an integral term having integral coefficients and a differential term having differential coefficients.

Therefore, the conventional air conditioner employs a calculation equation for the opening degree of the electronic expansion valve including the proportional coefficients, the differential coefficients, etc., wherein an outdoor controller calculates the opening degree of the outdoor electronic expansion valve that enables the target overheating degree by using the calculation equation. Also, the coefficients of the calculation equation for the opening degree are established by air conditioner manufacturers through experiment or simulation in such a manner that the coefficients can be varied according to a difference between the target overheating degree and the present overheating degree.

However, if such a conventional air conditioner is operated in specific environment, which is different from environment where the aforementioned coefficients are established (for example, different outdoor temperature), the overheating degree is not appropriately adjusted. That is, the aforementioned calculation equation for the opening degree is suitable only when the air conditioner is subject to the outdoor temperature predicted by the air conditioner manufacturers. However, if the air conditioner is subject to severe hot or cold environment, the opening degree of the outdoor electronic expansion valve that optimizes the overheating degree cannot be precisely calculated, so the opening degree of the outdoor electronic expansion valve is not converged to a predetermined opening degree, causing divergence or fluctuation of the opening degree. This is because the overheating degree according to the opening degree of the outdoor electronic expansion valve may vary depending on the outdoor temperature.

### SUMMARY OF THE INVENTION

Accordingly, the present invention has been made to solve above-mentioned problems occuring in the prior art, and an object of the present invention is to provide an air conditioner and a method of controlling an electronic expansion valve thereof, capable of modifying a calculation equation for an opening degree of the electronic expansion valve when the opening degree of the electronic expansion valve is abnormally varied.

In order to accomplish this object, according to an aspect of the present invention, there is provided a method of controlling an electronic expansion valve of an air conditioner, the method includes the steps of monitoring an opening degree of the electronic expansion valve while adjusting an overheating degree by varying the opening degree of the electronic expansion valve, modifying a calculation equation for the opening degree, which determines a size of the opening degree, when the opening degree of the electronic expansion valve is abnormally varied, and adjusting the opening degree of the electronic expansion valve according to the modified calculation equation for the opening degree.

The abnormal variation is determined when the opening degree of the electronic expansion valve is not converged to a predetermined opening degree.

It is determined that the opening degree of the electronic expansion valve is abnormally varied, if an average value of variation in the opening degree of the electronic expansion valve during a first reference time before determining the abnormal variation of the opening degree is greater than an average value of variation in the opening degree of the electronic expansion valve during a second reference time, which is longer than the first reference time, before determining the abnormal variation of the opening degree, and this state is maintained for at least a third reference time.

The calculation equation for the opening degree of the electronic expansion includes a proportional coefficient determining a variation amount of the opening degree and a differential coefficient determining a variation speed of the opening degree, in which the calculation equation for the opening degree is modified by reducing the proportional coefficient when detecting the abnormal variation of the opening degree.

The differential coefficient is reduced when the proportional coefficient is reduced several times more than a reference time and the proportional coefficient is reduced again when the opening degree is abnormally varied even after modifying the differential coefficient.

It is determined that the opening degree of the electronic expansion valve is abnormally varied, if a value obtained through multiplying deviation of the opening degree in a predetermined determination step by deviation of the opening degree in a previous determination step represents a negative value and a number of times representing the negative value exceeds a reference number of times during a determination step performed for a fourth reference time to determine the abnormal variation of the opening degree before the abnormal variation of the opening degree has been determined, in which the deviation of the opening degree is a difference between an average value of the opening degree of the electronic expansion valve during a fifth reference time before the abnormal variation of the opening degree is determined and a value of the opening degree of the electronic expansion valve when the abnormal variation of the opening degree is determined.

It is determined that the opening degree of the electronic expansion valve is abnormally varied, if the number of times representing the negative value exceeds the reference number of times and the average value of the deviation of the opening degree during a sixth reference time before determining the abnormal variation of the opening degree exceeds a reference value.

The calculation equation for the opening degree of the electronic expansion includes a proportional coefficient determining a variation amount of the opening degree and a differential coeffcient determining a variation speed of the opening degree, in which the calculation equation for the opening degree is modified by reducing the proportional coefficient when detecting the abnormal variation of the opening degree.

It is determined that the opening degree of the electronic expansion valve is abnormally varied, if a value obtained through multiplying deviation of the opening degree in a step of determining the abnormal variation of the opening degree by deviation of the opening degree in a previous determination step represents a positive value and this state maintains for a seventh reference time before the abnormal variation of the opening degree has been determined.

The calculation equation for the opening degree of the electronic expansion includes a proportional coefficient determining a variation amount of the opening degree and a differential coefficient determining a variation speed of the opening degree, in which the calculation equation for the opening degree is modified by reducing the proportional coefficient when detecting the abnormal variation of the opening degree.

The calculation equation for the opening degree is not modified during an eight reference time when the calculation equation for the opening degree has been modified.

According to another aspect of the present invention, there is provided an air conditioner. The air conditioner includes an electronic expansion valve for adjusting an overheating degree of a refrigerant flow path by varying an opening degree thereof, and a microcomputer monitoring variation of the opening degree of the electronic expansion valve and modifying a calculation equation for the opening degree of the electronic expansion value to vary the opening degree of the electronic expansion valve when abnormal variation of the electronic expansion valve is detected.

The calculation equation for the opening degree of the electronic expansion includes a proportional coefficient determining a variation amount of the opening degree and a differential coefficient determining a variation speed of the opening degree, in which the calculation equation for the opening degree is modified by reducing the proportional coefficient when detecting the abnormal variation of the opening degree.

The microcomputer decides that the opening degree of the electronic expansion valve is abnormally varied when the opening degree of the electronic expansion valve is not converged to a predetermined opening degree.

### BRIEF DESCRIPTION OF THE DRAWINGS

The above and other objects, features and advantages of the present invention will be more apparent from the following detailed description taken in conjunction with the accompanying drawings, in which:
FIG. 1 is view showing a refrigerant flow path of an air conditioner according to an embodiment of the present invention;
FIG. 2 is a block view illustrating the air conditioner according to an embodiment of the present invention; and
FIG. 3 is a flowchart illustrating a control procedure for an electronic expansion valve of the air conditioner according to an embodiment of the present invention.

### DETAILED DESCRIPTION OF THE PREFERRED EMBODIMENTS

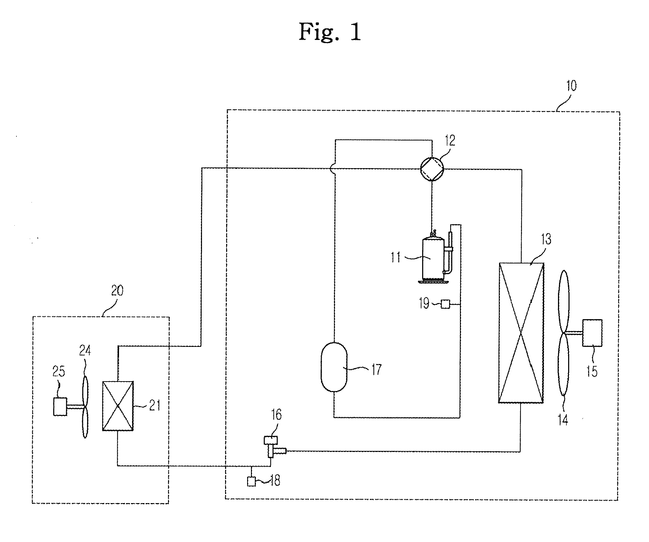

Hereinafter, exemplary embodiments of the present invention will be described with reference to the accompanying drawings. As illustrated in FIG. 1, an air conditioner according to an embodiment of the present invention includes an outdoor unit 10 and an indoor unit 20 connected to the outdoor unit 10.

The outdoor unit 10 includes a compressor 11 compressing a refrigerant, a 4-way valve 12 controlling directions of the refrigerant exhausted from the compressor 11, an outdoor heat exchanger 13 receiving the refrigerant compressed in the compressor 11 so as to perform heat-exchange with external air, an outdoor fan 14 forcibly blowing the refrigerant to the outdoor heat exchanger 13, an outdoor fan motor 15 rotating the outdoor fan 14, an electronic expansion valve 16 varying the amount of refrigerant, which flows from the outdoor heat exchanger 13 to an indoor unit 20, so as to adjust an overheating degree, and an accumulator 17 transmitting the refrigerant discharged from the indoor and outdoor heat exchanger 13 to the compressor 11 in a gaseous state.

In addition, the compressor 11 is provided on an intake side thereof with an intake temperature sensor 19 measuring the temperature of the refrigerant being introduced into the compressor 11. In addition, a low pressure temperature sensor 18 is installed adjacent to the electronic expansion valve 16 in order to measure the temperature of the refrigerant, which flows into the indoor unit 20 by way of the electronic expansion valve 16. For reference, the intake temperature sensor 19 and the low pressure temperature sensor 18 may be installed at the outlet and inlet of an indoor heat exchanger 21 (on the basis of the flow of the refrigerant during the cooling operation of the air conditioner), which will be described later.

Further, the indoor unit 20 includes an indoor heat exchanger 21, in which air is introduced and heat-exchanged, an indoor fan 24 allowing external air to be introduced into the indoor unit 20 and then exhausted to the exterior of the indoor unit 20 by passing through the indoor heat exchanger 21, and an indoor fan motor 25 rotating the indoor fan 24.

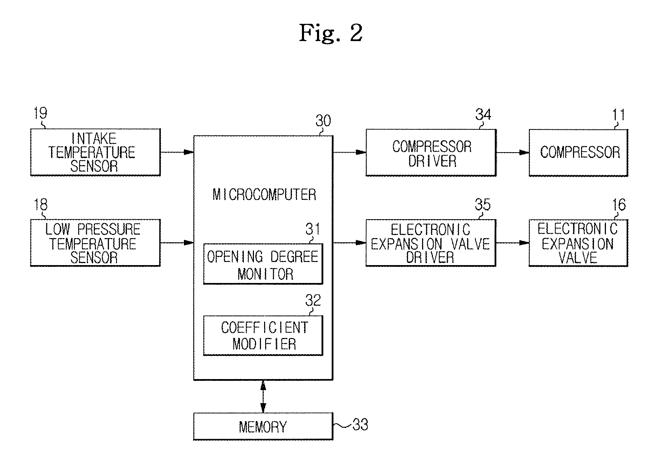

As shown in FIG. 2, in addition to the components shown in FIG. 1, the air conditioner according to an embodiment of the present invention includes a memory 33 storing a calculation equation for the opening degree of the electronic expansion valve 16, a basic opening degree and a modified opening degree of the electronic expansion valve 16, a microcomputer 30 controlling the electronic expansion valve 16 and ether components, a compressor driver 34 driving the compressor 11, and the electronic expansion valve driver 35 driving the electronic expansion valve 16.

The calculation equation for the opening degree, which is stored in the memory 33, is as follows.
(1) opening degree of electronic expansion valve = previous opening degree of electronic expansion valve + variation amount of opening degree of electronic expansion valve.
(2) variation amount of opening degree of electronic expansion valve = (deviation of overheating degree x E + □ deviation of overheating degree x D) x α
   wherein, deviation of overheating degree = present overheating degree - target overheating degree.
   □ deviation of overheating degree = present deviation of overheating degree - previous deviation of overheating degree.
   E: proportional coefficient, D: differential coefficient, α: external air temperature coefficient

In above calculation equation, the deviation of the overheating degree is a difference between the present overheating degree and the target overheating degree, and the overheating degree is a value obtained by subtracting a measured temperature of the low pressure temperature sensor 18 from a measured temperature of the intake temperature sensor 19. Also, the present overheating degree refers to an overheating degree measured whenever the opening degree monitoring cycle of the electronic expansion valve 16 is performed, and the target overheating degree is an optimal overheating degree established by manufacturers. In the present invention, for example, the target overheating degree is set to 5°C.

The variation amount of the deviation of the overheating degree is a value obtained by subtracting a previous deviation of the overheating degree from a present deviation of the overheating degree, wherein the present deviation of the overheating degree is a deviation of the overheating degree calculated whenever the aforementioned opening degree monitoring cycle of the electronic expansion valve 16 is performed, and the previous deviation of the overheating degree is a deviation of the overheating degree calculated in the previous cycle.

The coefficient E is a proportional coefficient which is multiplied by the deviation of the overheating degree to determine the variation amount of the opening degree. The coefficient D is a differential coefficient, which is multiplied by the variation amount of the deviation of the overheating degree, to determine a variation speed of the opening degree. The coefficients E and D may vary depending on the amount of the deviation of the overheating degree. The coefficient α is an external air temperature coefficient, which may vary depending on the external air temperature. Therefore, values of E, D and α, which are applied to the calculation equation for the opening degree of the electronic expansion valve 16, are differently set up corresponding to the deviation of the overheating degree, the external air temperature, etc., and these values are stored in the memory 33 in the form of a table.

The microcomputer 30 includes an opening degree monitor 31 that monitors the variation of the opening degree of the electronic expansion valve 16 so as to determine the abnormal variation of the opening degree, and a coefficient modifier 32 that modifies the coefficients of the calculation equation for the opening degree when the opening degree of the electronic expansion valve 16 is abnormally varied.

When the opening degree monitoring cycle of the electronic expansion valve 16 is performed and the opening degree of the electronic expansion valve 16 is varied, the varied opening degree of the electronic expansion valve 16 is stored in the memory 33. At this time, the opening degree monitor 31 monitors whether the opening degree of the electronic expansion valve 16 is adjusted in unstable condition, causing divergence or fluctuation of the opening degree, by using the values of the opening degree of the memory 33.

In other words, the opening degree monitor 31 compares an average value □EEV_AVG(1) of variation in the opening degree of the electronic expansion valve 16 during a first reference time (e.g. 5 minutes) before determining the abnormal variation of the opening degree with an average value □EEV_AVG(2) of variation in the opening degree of the electronic expansion valve 16 during a second reference time (e.g. 30 minutes) before determining the abnormal variation of the opening degree. If □EEV_AVG(1) is greater than □EEV_AVG(2) and this state is maintained for at least a third reference time (e.g. 10 minutes), it is determined that the opening degree of the electronic expansion valve 16 is divergent. The divergence in the opening degree of the electronic expansion valve means that the overheating degree of the air conditioner gradually drift from the target overheating degree due to the variation of the opening degree of the electronic expansion valve 16. The aforementioned first to third reference times may be properly selected according to the number of times for the opening degree monitoring cycles of the electronic expansion valve, specifications of the air conditioner, etc., and the second reference time must be longer than the first reference time.

In addition, in the opening degree monitoring cycle of the electronic expansion valve 16 performed for a fourth time (e.g. 30 minutes), if the value obtained through multiplying the deviation (present gab) of the opening degree of the respective cycle by deviation (previous gap) of the opening degree of the previous cycle represents a negative value (i.e. present gab x previous gab (previous) < 0) and a number of times representing the negative value exceeds a reference rate (e.g. 80%), the opening degree monitor 31 decides that the opening degree of the electronic expansion valve 16 is fluctuated. The fluctuation in the opening degree of the electronic expansion valve means that the overheating degree of the air conditioner repeats high and low states about the target overheating degree.

The aforementioned deviation of the opening degree is a difference between an average value of variation in the opening degree of the electronic expansion valve during a fifth reference time (e.g. 5 minutes) before the abnormal variation of the opening degree is determined and a value of the opening degree of the electronic expansion valve in each cycle.

In addition to the aforementioned conditions, the opening degree monitor 31 may decide that the electronic expansion valve 16 is fluctuated only when an average value of the deviation of the opening degree of the electronic expansion valve exceeds a reference value (e.g. 3 steps) during a sixth reference time (e.g. 10 minutes) before determining the abnormal variation of the opening degree. That is, if the overheating degree of the air conditioner nearly approaches the target overheating degree, the fluctuation is disregarded even if the overheating degree of the air conditioner is fluctuated due to the variation of the opening degree of the electronic expansion valve 16.

Finally, when a result of "present gab x previous gab > 0" is maintained for at least a seventh reference time (e.g. 30 minutes), it is determined that the opening degree of the electronic expansion valve 16 is not properly adjusted even though the opening degree of the electronic expansion valve 16 is not divergent or fluctuated. Such a result is a problem occurring when discarding figures below the decimal point from the calculation result of the calculation equation for the opening degree of the electronic expansion valve. This problem occurs when the finally calculated opening degree of the electronic expansion valve 16 is constantly maintained because the results obtained from the calculation equation for the opening degree of the electronic expansion valve are different only in the figures below the decimal point. When this problem occurs, the overheating degree of the air conditioner cannot reach the target overheating degree, but continuously remain in a specific value.

The coefficient modifier 32 maintains or modifies the coefficients of the calculation equation for the opening degree according to the results of the opening degree monitor 31. When the opening degree monitor 31 decides that the opening degree of the electronic expansion valve is divergent, the coefficient modifier 32 reduces the coefficient E. At this time, the reducing size may vary depending on the specification of the air conditioner. The coefficient E is a coefficient mainly related to the variation amount of the opening degree of the electronic expansion valve. If the coefficient E is reduced, the variation amount of the opening degree is also reduced, so that the divergence in the opening degree of the electronic expansion valve can be attenuated.

The coefficient modifier 32 examines the number of reducing times for the coefficient E in the previous cycle before reducing the coefficient E, and reduces the coefficient D by one time if the number of reducing times for the coefficient E exceeds the reference time (e.g. 3 times). After that, coefficient modifier 32 can reduce the coefficient E again in the next cycle when the opening degree of the electronic expansion valve 16 is divergent.

When the opening degree monitor 31 detects fluctuation in the opening degree of the electronic expansion valve, the coefficient modifier 32 reduces the coefficient D. At this time, the reducing size may be properly selected depending on the specification of the air conditioner. The coefficient D is related to the variation speed of the opening degree of the electronic expansion valve. If the coefficient D is reduced, mechanical inertia is reduced according to the reduction in the variation speed of the opening degree of the electronic expansion valve, so that the vibration in the opening degree of the electronic expansion valve can also be attenuated.

Finally, when the opening degree monitor 31 detects that the opening degree of the electronic expansion valve 16 remains in a specific value, the coefficient modifier 32 increases the coefficient E. At this time, the increasing size may be properly selected depending on the specification of the air conditioner. If the coefficient E is increased, the result of the calculation equation for the opening degree of the electronic expansion valve increases, so that the opening degree of the electronic expansion valve 16 deviates from a specific value, and the overheating degree of the air conditioner can reach the target overheating degree by adjusting the opening degree of the electronic expansion valve 16 in the next cycle.

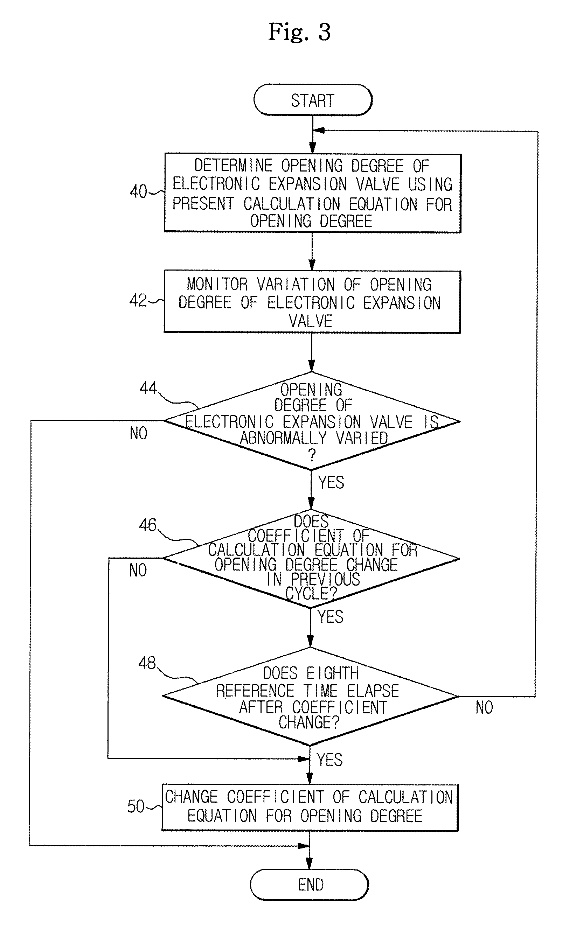

Hereinafter, a control procedure for the electronic expansion valve of the air conditioner according to an embodiment of the present invention will be described with reference to FIG. 3. The opening degree monitoring cycle of the electronic expansion valve shown in FIG. 3 is performed at a predetermined interval. According to the present invention, for example, the cycle is performed at an interval of 20 seconds.

When the opening degree monitoring cycle of the electronic expansion valve is initially performed, the microcomputer 30 calculates the deviation of the overheating degree, etc., so as to determine the coefficients of the calculation equation for the opening degree. If the cycle is not the first one, the opening degree of the electronic expansion valve 16 is calculated using the calculation equation for the opening degree stored in the previous cycle (step 40). Also, the opening degree of the electronic expansion valve 16 is adjusted according to the calculation equation. The opening degree monitor 31 monitors the variation of the opening degree of the electronic expansion valve 16 while checking the calculated opening degree of the electronic expansion valve 16 and the previous opening degrees of the electronic expansion valve 16 stored in the memory 33 (step 42).

Further, it is determined whether the opening degree of the electronic expansion valve is abnormally varied (step 44). At this time, if the opening degree is not converged to a predetermined opening degree while causing divergence or fluctuation of the opening degree of the electronic expansion valve 16, the opening degree monitor 31 determines that the opening degree of the electronic expansion valve is abnormally varied.

If there is no defect in the opening degree of the electronic expansion valve, the opening degree monitoring cycle of the electronic expansion valve is completed. However, if there is detect in the opening degree of the electronic expansion valve, it is determined whether the coefficients of the calculation equation for the opening degree in the previous cycle have been changed (step 46). Also, if the coefficients in the previous cycle have not been changed, the coefficients of the calculation equation for the opening degree are changed according to the type of the defect (step 50).

In other words, if the opening degree of the electronic expansion valve 16 is diverged, the proportional coefficient is reduced. In addition, if the opening degree of the electronic expansion valve 16 is fluctuated, the differential coefficient is reduced. Further, if the opening degree of the electronic expansion valve 16 remains in a specific value, the proportional coefficient is increased.

Meanwhile, if it is determined in step 46 that the coefficients of the calculation equation for the opening degree in the previous cycle have been changed, the coefficients are changed and it is determined whether an eighth reference time (e.g. 30 minutes) has lapsed (step 48). If the eighth reference time has not lapsed after changing the coefficients, the procedure returns to step 40. In addition, if the eighth reference time has lapsed, step 50 is performed. The reason for changing the coefficients again after the eighth reference time has lapsed is that if the coefficients are changed again before the system is stabilized, the system may be become more unstable. If the coefficients are modified in step 50, the modified coefficients are stored in the memory 33, and the opening degree of the electronic expansion valve 16 is calculated based on the modified coefficients in the next cycle.

As described above in detail, according to the present invention, the air conditioner can modify the calculation equation for the opening degree of the electronic expansion valve such that the overheating degree of the air conditioner is properly adjusted suitable for environmental conditions thereof, even if the air conditioner is operated under specific environment that does not correspond to the predetermined calculation equation for the opening degree of the electronic expansion valve. Accordingly, efficiency of the air conditioner can be prevented from being degraded and operation the air conditioner can be prevented from being interrupted.

## Claims

1. A method of controlling an electronic expansion valve of an air conditioner, the method comprising the steps of:
monitoring an opening degree of the electronic expansion valve while adjusting an overheating degree by varying the opening degree of the electronic expansion valve;
modifying a calculation equation for the opening degree, which determines a size of the opening degree, when the opening degree of the electronic expansion valve is abnormally varied; and
adjusting the opening degree of the electronic expansion valve according to the modified calculation equation for the opening degree.

2. The method as claimed in claim 1, wherein the abnormal variation is determined when the opening degree of the electronic expansion valve is not converged to a predetermined opening degree.

3. The method as claimed in claim 1, wherein it is determined that the opening degree of the electronic expansion valve is abnormally varied, if an average value of variation in the opening degree of the electronic expansion valve during a first reference time before determining the abnormal variation of the opening degree is greater than an average value of variation in the opening degree of the electronic expansion valve during a second reference time, which is longer than the first reference time, before determining the abnormal variation of the opening degree, and this state is maintained for at least a third reference time.

4. The method as claimed in claim 3, wherein the calculation equation for the opening degree of the electronic expansion includes a proportional coefficient determining a variation amount of the opening degree and a differential coefficient determining a variation speed of the opening degree, in which the calculation equation for the opening degree is modified by reducing the proportional coefficient when detecting the abnormal variation of the opening degree.

5. The method as claimed in claim 4, wherein the differential coefficient is reduced when the proportional coefficient is reduced several times more than a reference time and the proportional coefficient is reduced again when the opening degree is abnormally varied even after modifying the differential coefficient.

6. The method as claimed in claim 1, wherein it is determined that the opening degree of the electronic expansion valve is abnormally varied, if a value obtained through multiplying deviation of the opening degree in a predetermined determination step by deviation of the opening degree in a previous determination step represents a negative value and a number of times representing the negative value exceeds a reference number of times during a determination step performed for a fourth reference time to determine the abnormal variation of the opening degree before the abnormal variation of the opening degree has been determined, in which the deviation of the opening degree is a difference between an average value of the opening degree of the electronic expansion valve during a fifth reference time before the abnormal variation of the opening degree is determined and a value of the opening degree of the electronic expansion valve when the abnormal variation of the opening degree is determined.

7. The method as claimed in claim 6, wherein it is determined that the opening degree of the electronic expansion valve is abnormally varied, if the number of times representing the negative value exceeds the reference number of times and the average value of the deviation of the opening degree during a sixth reference time before determining the abnormal variation of the opening degree exceeds a reference value.

8. The method as claimed in claim 6 or 7, wherein the calculation equation for the opening degree of the electronic expansion includes a proportional coefficient determining a variation amount of the opening degree and a differential coefficient determining a variation speed of the opening degree, in which the calculation equation for the opening degree is modified by reducing the differential coefficient when detecting the abnormal variation of the opening degree.

9. The method as claimed in claim 1, wherein it is determined that the opening degree of the electronic expansion valve is abnormally varied, if a value obtained through multiplying deviation of the opening degree in a step of determining the abnormal variation of the opening degree by deviation of the opening degree in a previous determination step represents a positive value and this state maintains for a seventh reference time before the abnormal variation of the opening degree has been determined.

10. The method as claimed in claim 9, wherein the calculation equation for the opening degree of the electronic expansion includes a proportional coefficient determining a variation amount of the opening degree and a differential coefficient determining a variation speed of the opening degree, in which the calculation equation for the opening degree is modified by increasing the differential coefficient when detecting the abnormal variation of the opening degree.

11. The method as claimed in claim 1, wherein the calculation equation for the opening degree is not modified during an eight reference time when the calculation equation for the opening degree has been modified.

12. An air conditioner comprising:
an electronic expansion valve for adjusting an overheating degree of a refrigerant flow path by varying an opening degree thereof; and
a microcomputer monitoring variation of the opening degree of the electronic expansion valve, and modifying a calculation equation for the opening degree of the electronic expansion value to vary the opening degree of the electronic expansion valve when abnormal variation of the electronic expansion valve is detected.

13. The air conditioner in claim 12, wherein the calculation equation for the opening degree of the electronic expansion includes a proportional coefficient determining a variation amount of the opening degree and a differential coefficient determining a variation speed of the opening degree, in which the microcomputer modifies the calculation equation for the opening degree by varying the proportional coefficient or the differential coefficient.

14. The air conditioner in claim 12, wherein the microcomputer decides that the opening degree of the electronic expansion valve is abnormally varied when the opening degree of the electronic expansion valve is not converged to a predetermined opening degree.
